(19) Europäisches Patentamt

European Patent Office

Office européen des brevets

(11) Veröffentlichungsnummer: **0 299 196 B1**

(12) **EUROPÄISCHE PATENTSCHRIFT**

(45) Veröffentlichungstag der Patentschrift: **20.05.92**

(21) Anmeldenummer: **88109029.4**

(22) Anmeldetag: **07.06.88**

(51) Int. Cl.⁵: **F21M 1/00**

(54) **Operationsleuchte.**

(30) Priorität: **11.07.87 DE 3723009**

(43) Veröffentlichungstag der Anmeldung:
**18.01.89 Patentblatt 89/03**

(45) Bekanntmachung des Hinweises auf die
Patenterteilung:
**20.05.92 Patentblatt 92/21**

(84) Benannte Vertragsstaaten:
**DE FR GB IT**

(56) Entgegenhaltungen:
**FR-A- 2 202 258**
**FR-A- 2 536 832**
**US-A- 4 639 838**

(73) Patentinhaber: **Heraeus Instruments GmbH**
**Heraeusstrasse 12-14**
**W-6450 Hanau am Main(DE)**

(72) Erfinder: **Bossler, Hans Jürgen**
**Meisenweg 22**
**W-6115 Münster/Altheim(DE)**
Erfinder: **Enders, Peter**
**Am Kirchholz 11**
**W-6000 Frankfurt 71(DE)**
Erfinder: **Boxhammer, Jörg, Dr.**
**Sterngasse 137**
**W-6103 Griesheim(DE)**
Erfinder: **Rudolph, Bernd**
**Brentanostrasse 12**
**W-8755 Alzenau(DE)**
Erfinder: **Sebralla Bruno**
**Tannenweg 3**
**W-6454 Bruchköbel(DE)**

(74) Vertreter: **Grimm, Ekkehard**
**Heraeus Instruments GmbH Zentralbereich**
**Patente und Lizenzen Heraeusstrasse 12-14**
**Postfach 1561**
**W-6450 Hanau 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Operationsleuchte mit wenigstens zwei getrennt aus verschiedenen Bereichen des Bodens des Leuchtengehäuses austretenden Lichtbündein, deren optische Achsen durch mindestens ein Stellglied auf ein Operationsfeld so ausrichtbar sind, daß sich die Lichtbündel unter Bildung eines verstärkten Beleuchtungsbereiches überlagern, wobei die Leuchte wenigstens einen Schallsensor aufweist, der ein vom Operationsfeld abhängiges elektrisches Signal zur Bildung eines Stellsignals für das Stellglied liefert.

Aus der US-PS 4,639,838 ist eine Operationsleuchte zur schattenfreien Beleuchtung des Operationsfeldes eines auf einem Operationstisch befindlichen Patienten bekannt. Das zu beleuchtende Operationsfeld wird mittels eines Infrarotlichtstrahlers oder akustischer Wellen markiert und durch einen im Lichtaustrittsbereich der Leuchte befindlichen Sensor zwecks Positionsermittlung der markierten Stelle aufgenommen und mit der Ausrichtung der aus der Operationsleuchte austretenden Strahlenbündel, welche im Operationsfeld zu einem verstärkten Beleuchtungsbereich zusammentreffen sollen, verglichen. Zu diesem Zweck ist der in der Leuchte befindliche Sensor mit einem Raumkoordinatendetektor versehen, welcher die im kartesischen Koordinatensystem (X-, Y-, Z-Achse) ermittelte Position mit der Einstellung der Strahlenbündel koordiniert. Die Einstellung erfolgt mit Hilfe einer angeschlossenen Recheneinheit, deren Ausgänge mit Elektromotoren als Stellglieder verbunden sind.

Als problematisch erweist sich bei dieser bekannten Vorrichtung, daß ein Vergleich zwischen dem angestrebten Beleuchtungsfeld und der eingestellten Strahlerposition nur bei Abgabe eines zusätzlichen Infrarotsignales oder Schallsignales möglich ist, so daß stets ein separater Infrarotstrahlengenerator bzw. Schallwellengenerator erforderlich ist, der bei Änderung des angestrebten Beleuchtungsfeldes zu betätigen ist. Eine selbsttätige Nachführung der aus der Leuchte austretenden Strahlenbündel beispielsweise bei zunehmender Vertiefung der Operationswunde ist nicht vorgesehen.

Aus der DE-PS 25 19 426 ist eine ringförmige Operationsleuchte zum Festeinbau im Operationssaal bekannt, deren mit Lichtaustrittsflächen versehenes ringförmiges Unterteil eine Vielzahl von Strahlern aufweist. Die Strahler sind verstellbar angeordnet, so daß mit Hilfe einer Lampenführungseinrichtung die Lichtachsen der Strahler ohne Bewegung der Operationsleuchte in einem horizontal und vertikal verstellbaren Punkt konvergieren, dessen Lage vorher genau festgelegt werden kann. Die Einzelleuchten sind im Gehäuse der Operationsleuchte kardanisch aufgehängt und über Führungsstangen und Federn verbunden. Der Schnittpunkt ist dabei in allen drei Raumachsen durch entsprechende Verstellung der die Steuereinrichtung bildenden Führungsstangen verstellbar. Hierzu ist ein Schlitten vorgesehen, welcher entlang von Führungsschienen verschiebbar ist. Die Verstellung erfolgt mit Hilfe von Antriebsmotoren.

Auf Grund des Festeinbaus der Leuchte ist die Wahlmöglichkeit beliebiger Strahlenaustrittsrichtungen eingeschränkt, so daß beispielsweise eine Wahl zwischen horizontaler und vertikaler Strahlenaustrittsrichtung nicht gegeben ist. Weiterhin ist eine automatische Nachfokussierung bei sich veränderndem Abstand während einer Operation nicht möglich.

Aus der FR-OS 23 39 129 ist eine Operationsleuchte bekannt, die zwecks gleichmäßiger Ausleuchtung des Operationsfeldes mehrere von der Lichquelle ausgehende Lichtbündel aufweist, welche auf jeweils zwei in einem Leuchtenarm angeordnete Umlenkspiegel gerichtet sind. Dabei wird jeweils ein Lichtbündel von einem inneren Umlenkspiegel zum Teil reflektiert und zum anderen Teil transmittiert und auf einen äußeren Umlenkspiegel geleitet. Die Neigung der Umlenkspiegel ist in bezug auf die horizontal verlaufende Achse des ursprünglichen Lichtbündels verstellbar. Somit gehen von jedem Leuchtenarm zwei auf das zu beleuchtende Feld gerichtete Lichtbündel aus, die konvergierbar sind. Bei einer eventuellen Abstandsänderung zwischen Operationsleuchte und Beleuchtungsfeld müssen die Umlenkspiegel zwecks Nachfokussierung erneut eingestellt werden.

Weiterhin ist aus der DE-OS 32 27 494 eine Operationsleuchte für zahn- und kieferntechnische Behandlungen bekannt, bei der ein Lichtbündel bei Bewegung des Behandlungsstuhls durch automatische Nachführung der Lampe ständig auf den Mundbereich des Patienten ausgerichtet bleibt. Die zugehörige Nachführeinrichtung weist einen im Kopfbereich des Patienten befindlichen Ultraschall-Sender und im Behandlungsraum montierte Ultraschall-Empfänger sowie eine Peilschaltung auf. Die Nachführung erfolgt über Servo- oder Schrittmotoren, durch die die Halterung der Lampe in bestimmte Positionen bzw. Neigungen gebracht werden kann. Eine solche Operationsleuchte ist aufgrund der erforderlichen Unterbringung des Ultraschallsenders in unmittelbarer Nähe des zu beleuchtenden Operationsfeldes, d. h. im Wundbereich, in der allgemeinen Chirurgie unbrauchbar; hier wären insbesondere Einstellungsfehler sowie Schwierigkeiten bei Handhabung und Sterilisation zu erwarten.

Die Erfindung stellt sich die Aufgabe, eine Operationsleuchte der eingangs genannten Art zu schaffen, deren Lichtbündel bei Verstellung des Abstandes zwischen Leuchte und Operationsfeld automatisch so nachgestellt werden, daß der verstärkte Beleuchtungsbereich in seiner Grundeinstellung erhalten bleibt. Dabei sollen evtl. Störungen, beispielsweise durch in den Strahlengang der Operationsleuchte ragende Hände oder Kopf des Operateurs vermieden werden.

Die Aufgabe wird erfindungsgemäß durch die kennzeichnenden Merkmale des Anspruchs 1 gelöst.

Weitere vorteilhafte Ausgestaltungen der Erfindung sind den Unteransprüchen zu entnehmen.

Die Lichtbündel treten in einer bevorzugten Ausführungsform in ringförmig angeordneten Öffnungen aus; sie werden entweder durch einzelne Lampen erzeugt, deren optische Achsen durch Reflektoren vorgegeben sind, oder über Umlenkspiegel reflektiert, die aus dem Inneren der Operationsleuchte von einer oder mehreren Lichtquellen bestrahlt werden. In beiden Fällen sind die Reflecktoren bzw. Umlenkspiegel über Drehgelenke in ihrer Lage verstellbar angeordnet, wobei die Verstellung mit Hilfe eines elektrischen Motors bzw. Schrittschaltmotors vorgenommen wird. Das Verstellsignal ist dabei der Differenz zwischen dem vom Ultraschallsensor erzeugten Abstandssignal und dem über einen Hallgenerator ermittelten Winkel der optischen Achse der Lichtstrahlen proportional.

Als besonders vorteilhaft erweist sich die innerhalb eines vorgegebenen Abstandsbereiches mögliche universelle Einsetzbarkeit der Operationsleuchte, wobei sowohl für die vertikale Strahlenaustrittsrichtung als auch für die horizontale Strahlenaustrittsrichtung trotz Verstellung des Abstandes eine optimale Tiefenausleuchtung von Operationswunden bzw. Körperhöhlen möglich ist. Ein weiterer Vorteil ist in der Beibehaltung der einmal eingestellten Leuchtfeldbreite des verstärkten Beleuchtungsbereiches bei Abstandsänderung zu sehen.

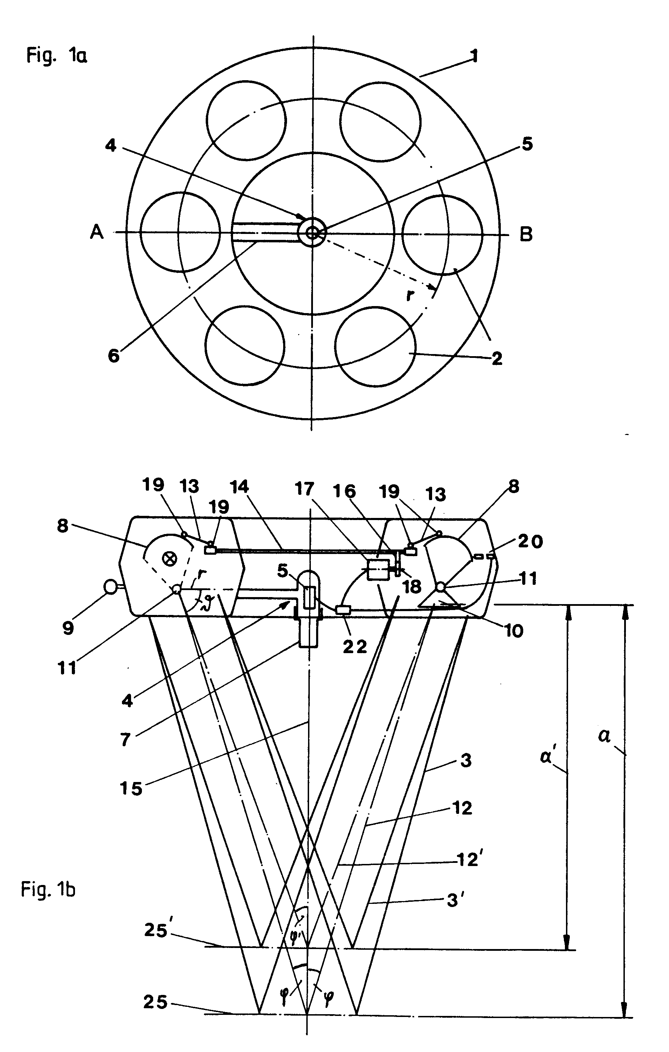

Im folgenden ist der Gegenstand der Erfindung anhand der Figuren 1a, 1b, 2a, 2b und 3 näher erläutert.

Figur 1a
zeigt schematisch eine Draufsicht der Lichtaustrittsseite der ringförmigen Operationsleuchte, während
Figure 1b
einen Schnitt entlang der Linie A-B gemäß Figur 1a darstellt;

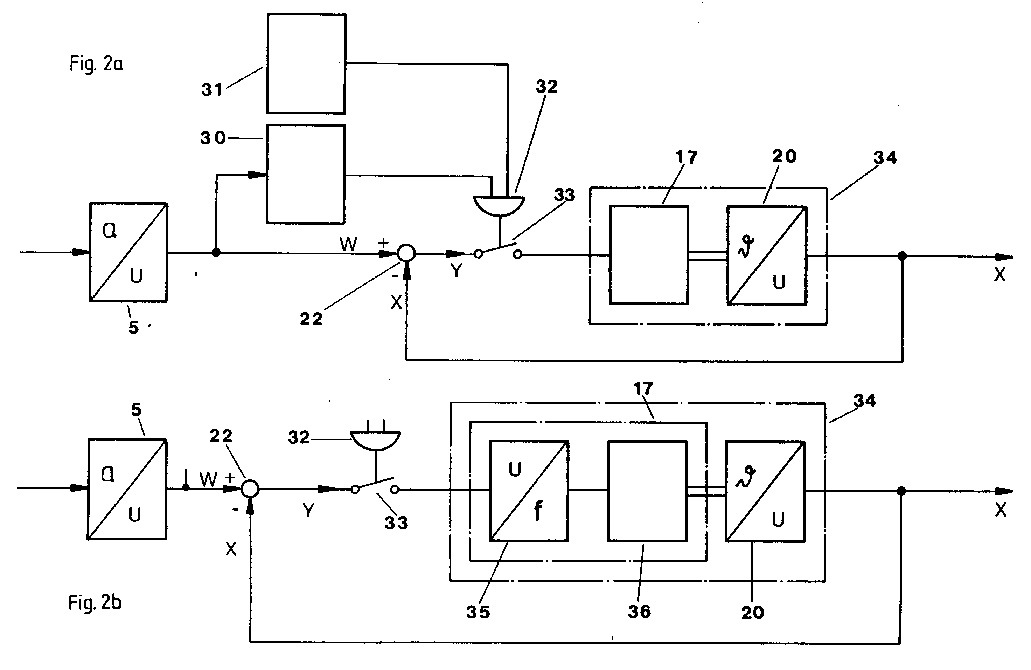

die Figuren 2a, 2b
zeigen in Blockschaltbildern den als Folgesystem ausgebildeten Regelkreis;
Figur 3
zeigt anhand eines Flußdiagramms den Ablauf der automatischen Nacheinstellung.

Gemäß Figur 1a befinden sich auf der Unterseite des ringförmigen Gehäuses 1 die Lichtaustrittsflächen 2, durch welche die zur Beleuchtung des Operationsfeldes dienenden Lichtbündel austreten, die gemäß dem in figur 1b dargestellten Querschnitt mit der Bezugsziffer 3 bezeichnet sind. Im Zentrum der Operationsleuchte befindet sich der rohrförmige Leuchtengriff 4, in dessen Innerem der Ultraschallentfernungsmesser 5 untergebracht ist. Der Leuchtengriff 4 ist über einen Arm 6 mit dem Gehäuse 1 mechanisch fest verbunden.

Gemäß Figur 1b ist auf den Leuchtengriff 4 der hülsenförmige Handgriff 7 aufgeschoben, der zwecks Sterilisation abnehmbar ist. Er ist beim Aufschieben auf Griff 4 arretierbar, wobei durch Aufschieben das dem Ultraschallentfernungsmesser 5 nachgeschaltete Folgesystem elektrisch aktiviert wird. Handgriff 7 sowie die am Umfang des Gehäuses befindlichen Griffe 9 sind an eine elektrische Einrichtung angeschlossen, die zur Erzeugung eines Freigabesignals am Regelkreis dient. Oberhalb der mit Fresnel-Linsen versehenen Lichtaustrittsflächen 2 befinden sich die mit infrarotlichtdurchlässigen Reflektoren versehenen Lampen 8, deren Strahlenaustrittswinkel durch Kippen der um die von einer Halterung 10 vorgegebene Drehachse 11 einstellbar sind. Die Drehachsen 11 der einzelnen Lampen verlaufen jeweils in tangentialer Richtung zu einem Kreis mittleren Druchmessers r, wie er in Figur 1a dargestellt ist. Durch Verstellung der Lampe 8 um die Achse 11 wird beispielsweise die Richtung der bisherigen optischen Achse 12 mit dem Einfallswinkel $\vartheta$ (zwischen der Achse 12 und dem Kreis mit dem Durchmesser r) verlassen und beispielsweise eine neue Richtung der optischen Achse 12$'$ mit einem Winkel $\vartheta\,'$ eingenommen. Das zugehörige Lichtbündel ist mit der Bezugsziffer 3$'$ versehen, während von der Darstellung des Winkels $\vartheta\,'$ zwecks besserer Übesicht abgesehen wurde.

Da alle Lampen 8 jeweils über einen an seinen Enden mit Gelenken 19 versehenen Steg 13 an einem umlaufende Ring 14 angeschlossen sind, erfolgt durch Drehung des Ringes 14 eine gleichsinnige Verstellung um die Kippachse 11, so daß alle Lampen mit ihren optischen Achsen 12 bzw. 12$'$ jeweils den gleichen Winkel $\phi$ bzw. $\phi\,'$ mit der Leuchtenachse 15 einschließen. Für die Beziehung zwischen den Winkeln $\vartheta$ und $\phi$ gilt : $\phi = 90° - \vartheta$.

Zur Drehung des Ringes 14 um die Leuchtenachse 15 weist dieser in einem Teilsegment einen Zahnkranz 16 auf, in welchen ein von einem Stellmotor 17 angetriebenes Ritzel 18 eingreift. Durch Antrieb des Motors 17 wird somit Ring 14 um Achse 15 gedreht, wobei die an ihren Enden jeweils mit kardanischen Gelenken 19 versehenen Stege 13 die Gehäuse der Lampen 8 um die Achse 11 bewegen. Zur Ermittlung des winkels $\zeta$ ist ein elektrisch arbeitender Winkelmesser 20 vorgesehen, der beispielsweise als Hallgenerator ausgeführt sein kann. Es können jedoch auch andere Winkelmesser eingesetzt werden, wie z. B Spannungsteiler oder optische Abtastsysteme. Wesentlich ist dabei, daß das aus dem Winkelmesser abgeleitete und gegebenenfalls verstärkte elektrische Signal als Regelgröße x mit der vom Ultraschall-Sensor erzeugten Führungsgröße w, beispielsweise in einem Differenzverstärker oder einem Komparator direkt vergleichbar ist, so daß an den Motor 17 nur dann ein Stellsignal y abgegeben wird, wenn Führungsgröße w und Regelgröße x unterschiedlich groß sind. Ultraschallentfernungsmesser 5, Motor 17 und Winkelmesser 20 sind an eine Schaltung angeschlossen, die nachfolgend anhand eines Blockschaltbildes näher erläutert wird. Die Führungsgröße w ist dem Abstand a bzw. a′ zwischen Ultraschallentfernungsmesser 5 und Beleuchtungsebene 25 bzw. 25′ direkt proportional. Der Winkel zwischen Leuchtenachse 15 und Beleuchtungsebene 25 kann im Bereich von 0° bis 90° variiert werden. Für winkel $\zeta$ gilt folgende Beziehung: $\zeta$ = arctg (a/r). Im stationären Fall gilt x = w, wobei sich die Regelgröße x aus folgender Beziehung ergibt:

x = p . a = p . r . tg $\zeta$ ; dabei wird mit p ein Proportionalitätsfaktor bezeichnet.

Der aus elektrisch leitendem Material bestehende Handgriff 7 ist beim Arretiervorgang an einen elektrischen Fühler anschließbar, durch den das automatisch arbeitende Folgesystem in Betrieb genommen wird. Bei Berührung des Handgriffs 7 durch den Operateur wird eine Einrichtung aktiviert, welche bei Verkleinerung des Abstandes zwischen Leuchte und Operationsfeld eine Nacheinstellung ermöglicht. Bei Vergrößerung des Abstandes erfolgt dagegen stets eine Nacheinstellung. Hierdurch sollen Störeinflüsse mit anschließenden Fehlmessungen, beispielsweise durch Kopf oder Hände des Operateurs verhindert werden. So ist es beispielsweise möglich, daß während des Einstellvorganges eine Hand des Chirurgen in der Ebene 25′ liegt, welche dann vom Ultraschallentfernungsmesser angemessen wird. Nach Entfernung der Hand mißt der Ultraschallentfernungsmesser 5 die reale Entfernung zum Operationsfeld in der Ebene 25 und stellt die optischen Achsen 12 entsprechend dieser Ebene ein. Aufgrund einer elektronischen Sperre wird nach dem Korrekturvorgang eine erneute Verkürzung des Abstandes zwischen Operationsleuchte und Beleuchtungsebene, beispielsweise durch erneutes Einführen einer Hand in Ebene 25′, nicht mehr als Führungsgrößenvorgabe wahrgenommen.

Falls mehrere Ultraschallentfernungsmesser eingesetzt werden sollen, werden diese exzentrisch zur Leuchtenachse 15 angeordnet. Dabel ist der zwischen den Lichtaustrittsflächen befindliche Teil der Unterseite des Leuchtengehäuses zur Aufnahme solcher Ultraschallentfernungsmesser geeignet.

Falls vom Chirurgen eine Erweiterung des Beleuchtungsfeldes erwünscht wird, kann durch eine Verschiebung des Schnittpunktes der optischen Achsen der Lampen unterhalb der Beleuchtungsebene ein erweitertes Beleuchtungsfeld geschaffen werden. Dies geschieht beispielsweise durch eine Verstärkung der vom Ultraschallentfernungsmesser abgegebenen Führungsgröße w oder durch Vorgabe einer Offsetspannung am Differenzverstärker bzw. Komparator. Die Einstellung kann dabei ebenso wie die Einstellung der Lichtstärke durch am Leuchtengehäuse angebrachte Einstellglieder bzw. durch ein vom Leuchtengehäuse getrenntes Bedienungspult vorgenommen werden.

Figur 2a zeigt im Blockschaltbild die Funktion des Folgesystems.

Der mit einem nachgeschalteten Verstärker ausgestattete Ultraschallentfernungsmesser5 liegt mit seinem Ausgang am Eingang eines Fensterkomparators 30, der prüft, ob die vom Ultraschallentfernungsmesser abgegebene Führungsgröße w innerhalb eines vorgegebenen Spannungsbereiches, d. h. zwischen $w_1$ und $w_2$, liegt. Dieses wird auch als Torbedingung bezeichnet. Der Ausgang des Fensterkomparators 30 wird zusammen mit dem Ausgang einer mit dem Griff bzw. den Griffen der Leuchte verbundenen Einrichtung 31 über eine logische Verknüpfungsschaltung 32 auf einen steuerbaren Schalter 33, welcher den zum Stellmotor 17 führenden Strom unterbrechen kann, geführt. Auf diese Weise soll sichergestellt werden, daß die Nachstellung nur innerhalb eines vorgegebenen Abstandsbereiches $a_1 < a < a_2$, von beispielsweise 50 cm bis 1,80 m, zwischen Operationsleuchte und Beleuchtungsfeld erfolgt. Sofern eine Abstandsverringerung vorliegt, kommt es nur dann zur Nacheinstellung, wenn der Handgriff berührt worden ist und die Einrichtung 31 somit ein Signal empfangen hat. Auf diese Weise werden Fehleinstellungen außerhalb des vorgesehenen Abstandsbereiches sowie Störungen durch vom Ultraschallentfernungsmesser erfaßte Körperteile oder Operationswerkzeuge des Chirurgen vermieden. Die Führungsgröße w wird dem Eingang eines Differenzverstärkers 22 bzw. Komparators zugeführt, dessen anderer Eingang von der Regelgröße x gespeist wird, die der Winkelstellung der Lampe entspricht. Die Winkelstellung wird durch einen Winkelmesser 20 ermittelt, wobei das daraus abgeleitete Signal gegebenenfalls über einen hier nicht dargestellten Verstärker in die Regelgröße x umgewandelt wird. Da Führungsgröße w und Regelgröße x dimensionsgleich sind, wird dies auch als Folgesystem mit Einheitsrückführung bezeichnet. Bei Differenz zwischen Führungsgröße w und Regelgröße z gibt der Differenzverstärker 22 ein Stellsignal y ab, welches nach Durchlaufen des steuerbaren Schalters 33 auf den Stellmotor 17 wirkt, der die mit dem Winkelmesser 20 verbundene Lampe um ihre schwenkbare Achse so lange kippt, bis die Differenz zwischen Regelgröße x und Führungsgröße w gleich Null ist. Eine optimale Einstellung der Leuchtfeldbreite kann dabei durch Veränderung der Offsetspannung am Differenzverstärker vorgenommen werden. Der maximale Felddurchmesser des Beleuchtungsfeldes liegt im Bereich von 33 bis 38 cm. Regelungstechnisch gesehen, bilden Stellmotor 17 und Winkelmesser 20 das mit Bezugsziffer 34 bezeichnete Stellglied. Im stationärem Fall gilt x = w, wobei x und w dem Abstand a direkt proportional sind.

Selbstverständlich ist es auch möglich, den Vergleich zwischen Führungsgröße w und Regelgröße x am eingang eines Reglers durchführen zu lassen, der dann ein Stellsignal y erzeugt. Dabei kann gegebenenfalls mit Hilfe der in der Regelungstechnik üblichen Einstellkriterien, wie z. B. Einstellung von Proportional-, Integral- und/oder Differentialanteil, eine ausreichende Stabilität des Systems ohne Überschwingungen erzielt werden.

Gemäß Figur 2b hat es sich in der Praxis besonders bewährt, das vom Differenzverstärker 22 erzeugte Stellsignal y einem Spannungsfrequenzwandler 35 zuzuführen, an den ein Schrittmotor 36 angeschlossen ist. Wandler 35 und Schrittmotor 36 bilden das bisher als Stellmotor 17 bezeichnete Antriebselement für die Lampenverstellung. Als Winkelmesser 20 wird vorzugsweise ein Hallgenerator eingesetzt. Die Schaltung zur Betätigung des steuerbaren Schalters entspricht der aus Figur 2a bekannten Anordnung.

Da der Stellmotor die Charakteristik eines integrierenden Stellgliedes hat, wird nach jeder Abstandsänderung die Winkelverstellung der optischen Achsen so lange vorgenommen, bis die Differenz zwischen Führungs- und Reglgröße beseitigt ist. Aufgrund der verhältnismäßig niedrigen Antriebsgeschwindigkeit des Stellmotors können in der Praxis Geschwindigkeitsfehler durch Trägheitsmomente bzw. Trägheitskräfte in der Regelstrecke vernachlässigt werden.

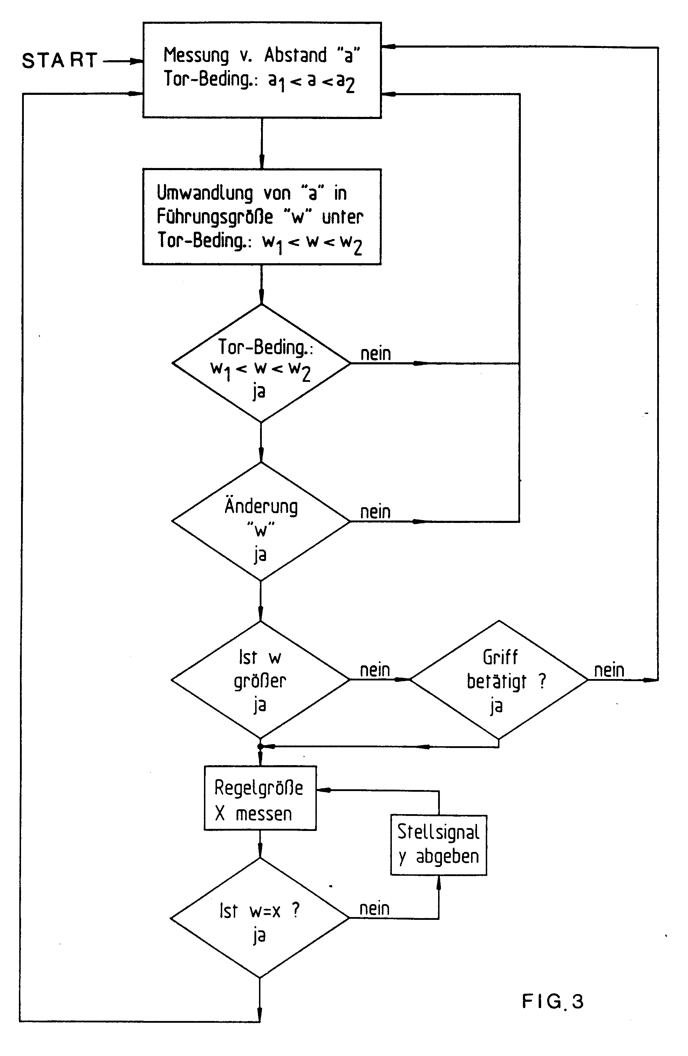

Anhand des in Figur 3 dargestellten Flußdiagramms wird nachfolgend die Wirkungsweise der erfindungsgemäßen Operationsleuchte näher erläutert.

In der Position "Start" wird mit dem Einschalten der Operationsleuchte durch den Ultraschallentfernungsmesser der Abstand "a" gemessen, der innerhalb eines vorgegebenen Abstandsbereiches zwischen $a_1$ und $a_2$ liegen soll, d. h. es gilt $a_1 < a < a_2$ (Torbedingung). Nach Umwandlung des Entfernungswertes a in ein als Führungsgröße w dienendes Signal wird geprüft, ob die obengenannte Torbedingung $w_1 < w < w_2$ erfüllt ist, wobei $w_1$ der Entfernung $a_1$ und $w_2$ der Entfernung $a_2$ entspricht. Sofern die Bedingung $w_1 < w < w_2$ erfüllt ist, wird

geprüft, ob sich der Wert w geändert hat. Bei Vorliegen einer Änderung wird festgestellt, ob w größer ofer kleiner geworden ist.

Sofern die Bedingung $w_1 < w < w_2$ sich nicht erfüllt bzw. keine Änderung der Führungsgröße w vorliegt, werden durch Rückführung über die "Nein-Pfade" außer der Abstandsmessung keine weiteren Aktivitäten ausgeführt. Falls sich der Abstand w verkleinert hat, wird über die mit dem bzw. den Griffen der Leuchter verbundene elektrische Einrichtung geprüft, ob eine Griffbetätigung vorliegt oder nicht. Sofern eine Griffbetätigung nicht vorliegt, wird durch Rückführung über den "Nein-Pfad" keine weitere Aktivität veranlaßt, sondern nur die Abstandsmessung zwischen Leuchte und Operationsebene fortgesetzt. Somit führen momentane Verkürzungen des vom Ultraschallentfernungsmesser gemessenen Abstandes durch zwischen Operationsfeld und Leuchte befindliche Körperteile des Chirurgen, wie z. B. Hände oder Kopf bzw. Operationsbestecke, nicht zu einer Fehleinstellung des Beleuchtungsbereiches.

Ist dagegen der Griff betätigt worden, oder ist eine Vergrößerung des Abstandes zum Operationsfeld durch Vergrößerung der Führungsgröße w festgestellt worden, wird die der Stellung der Lampen entsprechende Regelgröße x über einen Winkelmesser ermittelt, gegebenenfalls verstärkt und mit der dimensionsgleichen Führungsgröße w verglichen. Anschließend wird geprüft, ob die Bedingung Führungsgröße gleich Regelgröße vorliegt. Ist die Bedingung nicht gegeben, wird solange ein Stellsignal y an das Stellglied zur Verstellung der Lampen abgegeben, die Regelgröße x gemessen und der Vergleich zwischen Regelgröße und Führungsgröße durchgeführt, bis die Bedingung w = x erfüllt ist.

Nachdem diese "Ja"-Bedingung erfüllt ist, finden weitere Aktivitäten außer der Messung des Abstandes a statt.

**Patentansprüche**

1. Operationsleuchte mit wenigstens zwei getrennt aus verschiedenen Bereichen des Bodens des Leuchtengehäuses austretenden Lichtbündeln (3), deren optische Achsen durch mindestens ein Stellglied auf ein Operationsfeld so ausrichtbar sind; daß sich die Lichtbündel (3) unter Bildung eines verstärkten Beleuchtungsbereiches überlagern, wobei die Leuchte wenigstens einen Schall-Sensor aufweist, der ein vom Operationsfeld abhängiges elektrisches Signal zur Bildung eines Stellsignals für das Stellglied liefert, dadurch gekennzeichnet, daß im Zentrum des Bodens der Leuchte ein Ultraschallentfernungsmesser (5) und/oder wenigstens zwei Ultraschallentfernungsmesser exzentrisch zur Leuchtenachse (15) angeordnet sind, die ein vom Abstand (a) des Operationsfeldes abhängiges elektrisches Signal als Führungsgröße für einen Regelkreis erzeugen, wobei mindestens ein Stellglied mit einem Stellglied mit einem Winkelmesser (20) verbunden ist, welcher die Regelgröße des Regelkreises erzeugt und daß im Bereich des Zentrums des Bodens und/oder am Umfang des Gehäuses Griffe (4, 9) zur Verstellung des Abstandes (a) der Leuchte zum Operationsfeld vorgesehen sind, wobei jeder Griff (4, 9) eine auf seine Handhabung ansprechende Einrichtung aufweist, die zur Erzeugung eines Freigabesignals am Regelkreis dient.

2. Operationsleuchte nach Anspruch 1, dadurch gekennzeichnet, daß der Ultraschallentfernungsmesser (5) im Griff (4) angeordnet ist.

3. Operationsleuchte nach Anspruch 1 oder 2, dadurch gekennzeichnet, daß der Ultraschallentfernungsmesser (5) einen Sender aufweist, der eine Frequenz im Bereich von 100 bis 400 KHz abstrahlt.

4. Operationsleuchte nach Anspruch 3, dadurch gekennzeichnet, daß der Sender Schallsignale mit einer Frequenz von etwa 220 KHz abstrahlt.

5. Operationsleuchte nach Anspruch 1, dadurch gekennzeichnet, daß der Winkelmesser (20) ein Hall-Generator ist.

6. Operationsleuchte nach Anspruch 1, dadurch gekennzeichnet, daß jedes Stellglied einen Elektromotor (17) aufweist.

7. Operationsleuchte nach Anspruch 6, dadurch gekennzeichnet, daß das Stellglied einen Schrittmotor aufweist.

8. Schaltungsanordnung zum Betrieb einer Operationsleuchte nach den Ansprüchen 1 bis 7, gekennzeichnet durch einen Regelkreis mit zwei Eingängen, wovon dem einen Eingang über eine Torschaltung das von dem/den Ultraschallentfernungsmessern aufgrund der Messung des Abstandes (a) erzeugte elektrische Signal als Führungsgröße (w) und dem anderen Eingang das oder/die Freigabesignale des/der Griffe zugeführt werden, wobei entweder aufgrund des Freigabesignals oder aufgrund eines durch Vergrößerung des Abstandes im Ultraschallentfernungsmesser erzeugten Signals der Regelkreis als Wirkungskette geschlossen wird, so daß die Führungsgröße (w) mit der Regelgröße (x) verglichen wird und bei Differenz zwischen Führungsgröße (w) und Regelgröße (x) ein Stellsignal (y) für das Stellglied erzeugt wird.

9. Schaltungsanordnung nach Anspruch 8, dadurch gekennzeichnet, daß Führungsgröße (w) und Regelgröße (x) in einem Komparator verglichen werden.

**Claims**

1. An operating lamp having at least two light beams (3) which emerge separately from different regions of the base of the lamp housing and the optical axes of which are so alignable at an operating site, by at least one adjusting member, that the light beams (3) are superimposed on one another along with the formation of a region of enhanced illumination, the lamp having at least one sound sensor which supplies an electrical signal, dependent upon the operating site for the formation of an adjusting signal for the adjusting member, characterised in that in the centre of the base of the lamp there is arranged an ultrasonic telemeter (5) and/or at least two ultrasonic telemeters are arranged eccentrically to the lamp axis (15), which generate an electrical signal, dependent upon the distance (a) of the operating site as a command value for a control circuit, in which respect at least one adjusting member is connected with an adjusting member to an angle measuring device (20), which produces the control value of the control circuit and in that in the region of the centre of the base and/or at the periphery of the housing handles (4, 9) are provided for the adjustment of the distance (a) of the lamp from the operating site, each handle (4, 9) having a mechanism which responds to its manipulation and which serves for the generation of a release signal at the control circuit.

2. An operating lamp according to Claim 1, characterised in that the ultrasonic telemeter (5) is arranged in the handle (4).

3. An operating lamp according to Claim 1 or 2, characterised in that the ultrasonic telemeter (5) has a transmitter which radiates a frequency in the range from 100 to 400 KHz.

4. An operating lamp according to Claim 3, characterised in that the transmitter radiates sound signals with a frequency of about 220 KHz.

5. An operating lamp according to Claim 1, characterised in that the angle measuring device (20) is a Hall generator.

6. An operating lamp according to Claim 1, characterised in that each adjusting member has an electric motor (17).

7. An operating lamp according to Claim 6, characterised in that the adjusting member has a stepping motor.

8. A circuit arrangement for operating an operating lamp according to Claims 1 to 7, characterised by a control circuit having two inputs, of which to the one input by way of a gate circuit the electrical signal, generated by the ultrasonic telemeter(s) by reason of the measurement of the distance (a), is supplied as a command value (w) and to the other input the release signal or signals of the handle or handles are supplied, in which respect either by reason of the release signal or by reason of a signal generated by an increase in the distance in the ultrasonic telemeter the control circuit is closed as an effective chain, so that the command value (w) is compared with the control value (x) and in the event of a difference between the command value (w) and the control value (x) an adjusting signal (y) for the adjusting member is generated.

9. A circuit arrangement according to Claim 8, characterised in that the command value (w) and the control value (x) are compared in a comparator.

**Revendications**

1. Appareil d'éclairage pour opérations chirurgicales, comportant au moins deux faisceaux de lumière (3) sortant séparément de différents domaines du fond de l'enceinte de l'appareil, les axes optiques desdits faisceaux de lumière pouvant être dirigés, par au moins un organe de réglage, vers un champ opératoire de manière que ces faisceaux de lumière (3) se superposent en formant un domaine d'éclairement renforcé, ledit appareil d'éclairage présentant au moins un capteur de son qui fournit un signal électrique, dépendant du champ opératoire, afin de former un signal de réglage pour l'organe de réglage, caractérisé par l'agencement, au centre du fond de l'appareil d'éclairage, d'un télémètre à ultrasons (5) et/ou d'au moins deux télémètre à ultrasons en agencement excentré par rapport à l'axe (15) de l'appareil d'éclairage, lesquels produisent, en tant que grandeur de référence pour une boucle de régulation, un signal électrique dépendant de la distance (a) du champ opératoire, au moins un organe de réglage étant lié à un goniomètre (20) qui génère la grandeur réglée de la boucle de régulation, et par la présence, dans la région du centre du fond et/ou à la périphérie de l'enceinte, de poignées (4, 9) pour modifier la distance (a) de l'appareil d'éclairage au plan opératoire, chaque poignée (4, 9) présentant un dispositif qui répond à sa manipulation et sert à produire un signal de déblocage.

2. Appareil d'éclairage pour opérations chirurgicales selon revendication 1, caractérisé par le fait que le télémètre à ultrasons (5) est agencé dans la poignée (4).

3. Appareil d'éclairage pour opérations chirurgicales selon revendication 1 ou 2, caractérisé par le fait que le télémètre à ultrasons (5) présente un émetteur rayonnant une fréquence dans la plage de 100 à 400 kHz.

4. Appareil d'éclairage pour opérations chirurgicales selon revendication 3, caractérisé par le fait que l'émetteur rayonne des signaux sonores avec une fréquence de l'ordre de 220 kHz.

5. Appareil d'éclairage selon revendication 1, caractérisé par le fait que le goniomètre (20) est un générateur à effet Hall.

6. Appareil d'éclairage pour opérations chirurgicales selon revendication 1, caractérisé par le fait que chaque organe de réglage présente un moteur électrique (17).

7. Appareil d'éclairage pour opérations chirurgicales selon revendication 6, caractérisé par le fait que l'organe de réglage présente un moteur pas-à-pas.

8. Agencement de circuit pour l'exploitation d'un appareil d'éclairage pour opérations chirurgicales selon revendications 1 à 7, caractérisé par une boucle de régulation avec deux entrées, la première entrée recevant, via un circuit de porte, en tant que grandeur de référence (w), le signal électrique produit par le ou les télémètres à ultrasons sur la base de la mesure de la distance (a), et l'autre entrée recevant le ou les signaux de déblocage de la poignée ou des poignées, la boucle de régulation étant fermée en tant que chaîne d'action soit sur la base du signal de déblocage, soit sur la base d'un signal produit dans le télémètre à ultrasons par accroissement de la distance, de sorte que la grandeur de référence (w) se trouve comparée à la grandeur réglée (x) et, en cas de différence entre grandeur de référence (w) et grandeur réglée (x), un signal de réglage (y) est produit pour l'organe de réglage.

9. Agencement de circuit selon revendication 8, caractérisé par le fait que grandeur de référence (w) et grandeur réglée (x) sont comparées dans un comparateur.

Fig. 1a

Fig. 1b

Fig. 2a

Fig. 2b

EP 0 299 196 B1

START → Messung v. Abstand "a"
Tor-Beding.: $a_1 < a < a_2$

Umwandlung von "a" in
Führungsgröße "w" unter
Tor-Beding.: $w_1 < w < w_2$

Tor-Beding.:
$w_1 < w < w_2$ — nein
ja

Änderung
"w" — nein
ja

Ist w
größer — nein — Griff betätigt ? — nein
ja — ja

Regelgröße
X messen

Stellsignal
y abgeben

Ist w=x ? — nein
ja

FIG.3

11